# EUROPEAN PATENT APPLICATION

(11) **EP 4 726 467 A1**
(43) Date of publication of application: **15.04.2026**
(21) Application number: 24205495.5
(22) Date of filing: 09.10.2024
(51) Int. Cl.: G02F 1/167, G02F 1/1339

(54) **LIGHT MODULATOR COMPRISING ONE OR MORE CONTINUOUS SPACER WALLS**

(71) Applicant: eLstar Dynamics Patents B.V., 3235 CD Rockanje (NL)
(72) Inventor: MITIOGLU, Anatolie, 5651 GW Eindhoven (NL); MASSARD, Romaric Mathieu, 5651 GW Eindhoven (NL)
(74) Representative: DeltaPatents B.V.

(57) **Abstract**

Some embodiments are directed to a light modulator. The light modulator comprises one or more continuous spacer walls extending across the first substrate and the second substrate. The one or more continuous spacer walls define a gap of the optical layer between the first substrate and the second substrate.

## Description

### TECHNICAL FIELD

The presently disclosed subject matter relates to a light modulator, a substrate for use in a light modulator, and a method for modulating light.

### BACKGROUND

A known light modulator is disclosed in WO2022023180, included herein by reference. The known light modulator comprises transparent or reflective substrates, and an optical layer extending between the substrates, the optical layer comprising a fluid comprising particles. Multiple electrodes are applied to the substrates in a pattern across the substrate. A controller may apply an electric potential to the electrodes to obtain an electro-magnetic field between the electrodes providing electrophoretic movement of the particles towards or from an electrode.

### SUMMARY

A light modulator, a substrate for a light modulator, and a method for modulating light are described in the accompanying claims. Specific embodiments of the invention are set forth in the dependent claims.

In an embodiment, a light modulator comprises one or more continuous spacer walls, which extend across substrates of the light modulator, and define a gap of the optical layer between a first substrate and a second substrate.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a building block,
Figure 1b schematically shows an example of an embodiment of a substrate,
Figure 1c schematically shows an example of an embodiment of a substrate,
Figure 1d schematically shows an example of an embodiment of a substrate,
Figure 1e schematically shows an example of an embodiment of a substrate,
Figure 1f schematically shows an example of an embodiment of a substrate,
Figures 2a-2e schematically show an example of an embodiment of a substrate,
Figure 3a schematically shows an example of an embodiment of a light modulator,
Figure 3b schematically shows an example of an embodiment of a light modulator,
Figure 3c schematically shows an example of an embodiment of a car,
Figures 4a-4c schematically show an embodiment of a light modulator,
Figure 5a-5d schematically show examples of embodiments of a substrate for use in an embodiment of a light modulator,
Figure 6a-6c schematically show examples of embodiments of a light modulator comprising spacer walls in a side view,
Figure 7 schematically shows an examples of an embodiment of a spacer wall in a side view,
Figure 8 schematically shows an example of an embodiment of a first substrate and a corresponding second substrate for use in a light modulator,
Figure 9 schematically shows an example of a method for modulating light according to an embodiment.

### Reference signs list

The following list of references and abbreviations corresponds to the figures, and is provided for facilitating the interpretation of the drawings and shall not be construed as limiting the claims.
- 10: a light modulator
- 11: a first substrate
- 12: a second substrate
- 13, 13a, 13b, 13c: electrodes
- 14, 14a, 14b: electrodes
- 15: a fluid
- 16: a controller
- 18, 18.1-4: spacer walls
- 18a, 18b: spacer walls
- 19: a bifurcation
- 20: a car
- 21: a light modulator
- 30: particles
- 40: a light modulator
- 41: a first substrate
- 42: a second substrate
- 43: a third substrate
- 46: a controller
- 71, 71.1-4: a width of a spacer wall
- 72': a gap of an optical layer
- 72, 72.1-4: a height of a spacer wall
- 73: a length of a spacer wall
- 74: a variation in height of a spacer wall
- 75: a distance between a spacer wall and a nearest electrode

- 100: a substrate
- 101: a substrate
- 102: a substrate
- 110, 110': a driving bus
- 111: a main line
- 112: a main line
- 113: a main line
- 114: a main line
- 119: a connecting zone
- 120, 120': a driving bus
- 121: a main line
- 122: a main line
- 123: a main line
- 124: a main line
- 129: a connecting zone
- 131-134: interdigitated electrodes
- 140: a building block
- 141: a building block
- 142: a building block
- 143: a building block
- 144: a building block
- 191: a direction
- 192: a direction
- 203: a substrate
- 204: a substrate
- 211: a building block
- 212: a building block
- 221: a building block
- 222: a building block
- 251: a building block
- 252: a building block
- 261: a building block
- 262: a building block

- 900: method for modulating light
- 910: applying an electric potential to at least one electrode

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

In an embodiment, a light modulator is provided with one or more continuous spacer walls, arranged to enable a more robust light modulator. Furthermore, by increasing the stability of the fluid, by which there is less risk of leakage, capillary forces are increased, and sedimentation is limited due to gravity. The spacer walls function as a spacer, as they extend across a first substrate and a second substrate of the light modulator, and define a gap of an optical layer between the first substrate and the second substrate. By defining the gap of the optical layer, the first substrate and the second substrate are spaced apart from each other.

In conventional light modulators, one or both substrates have patterned electrodes, e.g., at least one electrode. The at least one electrode, e.g., a metal track, conducts electricity across the substrate. This causes electric fields, which in turn modulate the optical field. The one or more spacer walls may follow along at least part of the at least one electrode, and/or the one or more spacer walls may not cross at least part of the at least one electrode. For example, at least part of the one or more continuous spacer walls, e.g., at least 50%, e.g., more than 80%, e.g., more than 90%, may be positioned on top of at least part of the at least one electrode. The part of the one or more spacer walls being positioned on top of at least part of the at least one electrode may follow along the at least one electrode, for example, by adopting the electrode shape. For example, the one or more spacer walls may be bifurcated to follow bifurcations in the at least one electrode.

A width of the part of the one or more continuous spacer walls being positioned on top of at least part of the at least one electrode may not exceed a width of the at least one electrode. By not exceeding the width of the least one electrode, the one or more spacer walls may leave space for particles in the ink to accumulate, and there may be no loss of the optical properties of the light modulator. A width of a spacer wall may not need to be correlated to the width of an electrode.

In addition to the spacing abilities of the one or more spacer walls, the one or more spacer walls may add a strong mechanical reinforcement, and thereby improve the mechanical robustness. As the one or more spacer walls may be continuous, uninterrupted, and monolithic structures, they may be advantageous, for example, during manufacture and/or usage of the light modulator. Fractures in the substrate, e.g., a glass substrate, may happen during manufacture as well as in product usage due to various reasons. For example, a substrate, e.g., a glass substrate, may be exposed locally to different temperatures; for example, sun exposure and/or shadow may be different across the substrate. Moreover, in practice the thin glass substrate of the light modulator is often attached to a thicker glass for mechanical robustness, e.g., for applications in automotive or architectural. PVB type material may be used to attach the thicker glass together with the light modulator glass. However, not only the glass thickness may be different, but also the type. Typically, the thicker glass is tempered, e.g., tempered window glass, while the light modulator glass is not, e.g., untempered display glass. This results in different thermal coefficients for both type of glass while they are glued via the PVB. Finally, mechanical shocks during production, installation or usage may cause fracture of the substrate. The one or more continuous spacer walls may diminish the ability of the liquid ink to leak away from the device at such an occasion. This way, the safety of the device may be reinforced.

Substrates are disclosed, e.g., for use in a light modulator, in particular, dynamic glazing. The substrate is transparent, and at least one electrode is applied to a side of the substrate, the electrode extending in a pattern across the side of the first substrate. At least one of the first and second substrates is transparent. In a glazing application both substrates are transparent. In other applications, e.g., a display, one of the two substrates may be opaque. The electrode may comprise non-transparent material, in particular reflective metal.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications.

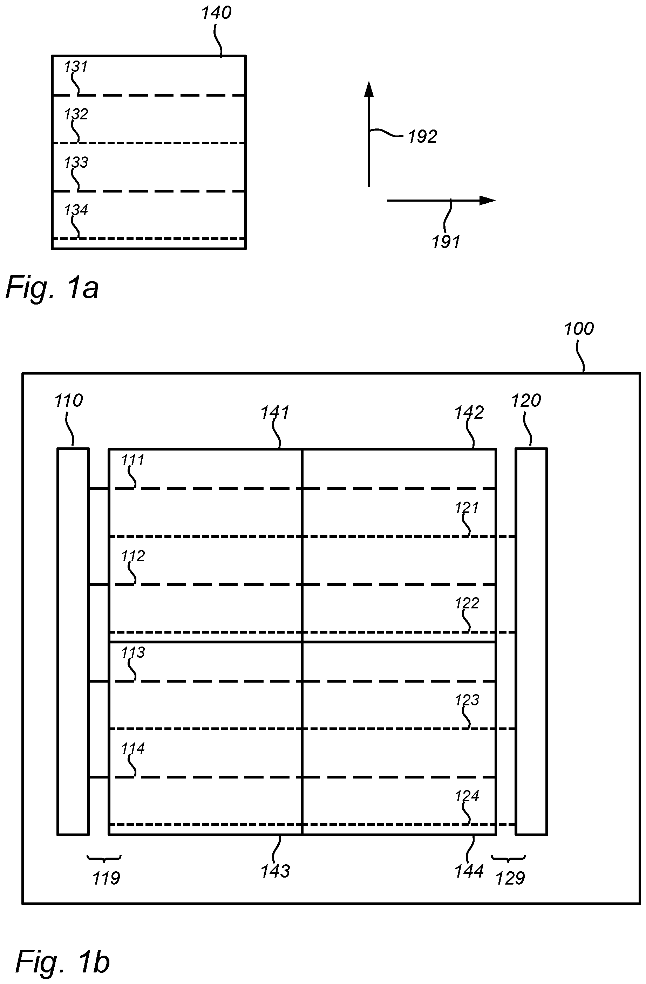

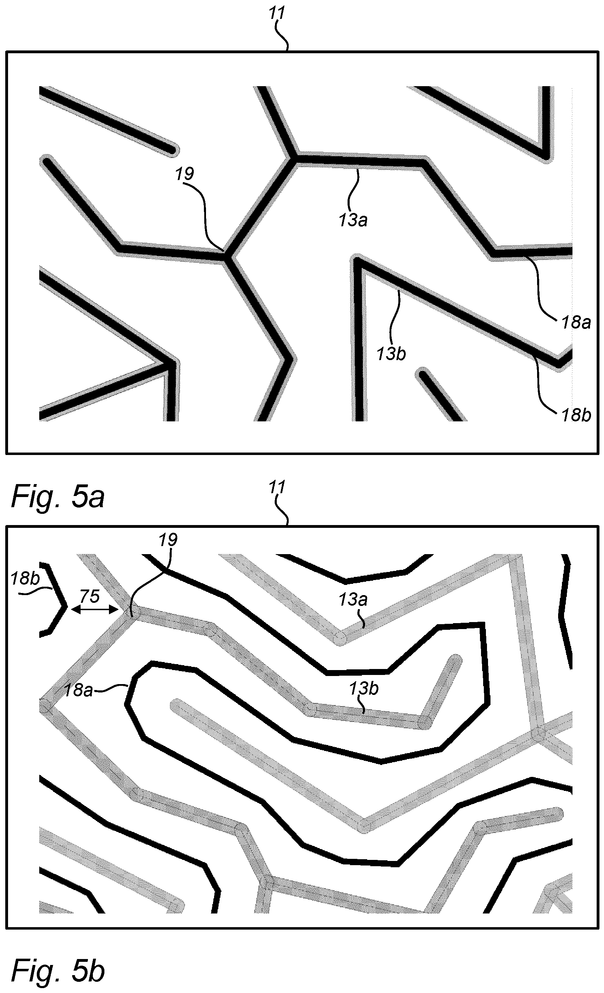

Figures 1a- 4c provide various examples of the electrode system on the first and second substrate and how they may be implemented or used in a light modulator. These examples may be provided with one or more continuous spacer walls. Figure 5a and following focus on the one or more continuous spacer wall, e.g., its placement, and/or its properties, dimensions, and/or interaction with the at least one electrode.

Some of the known light modulators which may be provided with spacer walls in the light modulator are based on the electrophoretic principle. For example, the substrate may comprise multiple interdigitated electrodes applied to the substrate, e.g., two electrodes, each of the multiple electrodes being arranged in a pattern across the substrate, the multiple interdigitated electrodes being arranged alternatingly with respect to each other on the substrate. Having multiple interdigitated electrodes allows local control over the electric field enabling electrophoretic control of particles.

Electrophoretic light modulators are explained more extensively herein and are used as the motivating example. In an embodiment, a light modulator comprises a first substrate and a second substrate. At least one of the first and second substrate may be according to an embodiment, e.g., comprising one or more continuous spacer walls. For example, the first and second substrates may be arranged with inner sides opposite to each other, using a substrate according to an embodiment. An optical layer is arranged between the first and second substrates. The electrode is arranged to modulate an electrical field in the optical layer. The optical layer comprises a fluid, e.g., liquid, comprising particles, wherein the particles are electrically charged or chargeable. The fluid may be a continuous fluid. The particles may be moved under control of the electrical field. For example, a controller may be configured to apply an electric potential to the electrode to obtain an electro-magnetic field at the electrode providing electrophoretic movement of the particles towards or from one of the at least one electrode causing modulation of the optical properties of the light modulator. For example, optical properties may include a transition between a high-transparent state and a low-transparent state or vice versa. Note that a transition may also alter thermal properties of the light modulator.

Below a number of known light modulators are reviewed, showing some of the options in technology and electrodes. These known substrates can advantageously be modified by adding one or more continuous spacer walls in the light modulator according to an embodiment. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. One or more continuous spacer walls may be provided on the substrate having electrodes, on an opposite substrate, or both.

US patent 10921678 with title `Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite of the first substrate, with an accumulation electrode. The first substrate and the second substrate enclose a pixel with a fluid and particles. In use an applied electro-magnetic field to the field electrode and the accumulation electrode provides movement of the particles from the field electrode and the accumulation electrode and vice versa. Any of these cited electrophoretic or dielectrophoretic light modulators may be adapted by including one or more continuous spacer walls in the light modulator according to an embodiment.

US patent 8054535B2 (included herein by reference) and US patent 8384659b2 (included herein by reference) show alternative example of electrophoretic light modulators in one of two substrates have two patterned electrodes.

Patterned electrodes are also used in dielectrophoretic light modulators. For example, US patent application US2005185104A1 (included herein by reference) and US20180239211A1 (included herein by reference) show a dielectrophoretic light modulators having a substrate with a patterned electrode. Any of these cited electrophoretic or dielectrophoretic light modulators may be adapted by including one or more continuous spacer walls in the light modulator according to an embodiment.

The paper "Reversible Metal Electrodeposition Devices: An Emerging Approach to Effective Light Modulation and Thermal Management," included by reference, also shows a substrate on which a patterned electrode is applied. One or more continuous spacer walls in the light modulator may be included herein.

A substrate according to an embodiment can be beneficially applied in a number of other technologies. For example, the light modulator may be dielectrophoretic light modulator, e.g., as shown in US20050185104 A1, included herein by reference. One or more continuous spacer walls according to an embodiment in the light modulator may be included herein.

A substrate as in an embodiment may also be used in other electrowetting. In electrowetting one needs electrodes on only one of the substrates. The substrate with electrodes may be according to an embodiment, e.g., comprising one or more continuous spacer walls.

An OLED layer may be combined with a light modulator as in an embodiment, in addition or instead. A micro-LED layer may be combined with a light modulator as in an embodiment, in addition or instead.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted. One or more continuous spacer walls according to an embodiment in the light modulator may be included herein.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect. One or more continuous spacer walls according to an embodiment in the light modulator may be included herein.

In an application of the light modulator for glazing both substrates are typically transparent. In other application, e.g., in television, e-readers, etc., only one substrate may be transparent.

**Figure 1b** schematically shows an example of an embodiment of a substrate. The substrate is in particular useful for use in a light modulator, e.g., of a kind described herein. Across the substrate an electrode system is applied in the form of multiple interdigitated electrodes. Shown in figure 1b are two interdigitated electrodes. The substrate may comprise one or more continuous spacer walls as in an embodiment.

The motivating example use of the substrate is in an electrophoretic light modulator. Typically, an electrophoretic light modulator comprising at least two substrates, each having at least two electrodes at each of the substrates; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one electrode is applied to the inner side of the first substrate. An optical layer is arranged between the first and second substrates. A controller is configured to apply an electric potential to the at least one electrode causing modulation of the optical properties of the light modulator. One or both of the first and second substrates are transparent and/or translucent.

There are many different kinds of light modulators that use at least one electrode applied to a substrate. The optical layer and controller may be arranged to modulate optical properties using effects that depend on the potential on the electrode; examples including the dielectrophoretic effect and the electrophoretic effect. For example, optical modulation may comprise the modulation of particles arranged in the optical layer. The number of electrodes may range from one on a single substrate, to multiple electrodes on one or both substrates.

The optical layer arranged between the first and second substrates may comprise particles, e.g., suspended in a fluid. The controller may be configured to apply an electric potential to the electrodes causing the particles to move thus modulating the optical properties of the light modulator.

In an embodiment, the particles comprise electrically charged or chargeable particles, and the controller is configured to apply an electric potential to the electrode to obtain an electro-magnetic field providing electrophoretic movement of the particles. In an embodiment, the electro-magnetic field is arranged between at least two electrodes arranged on the same substrate or arranged on different substrates.

In an embodiment, the particles comprise dielectric particles, and the controller is configured to apply an electric potential to the electrode to apply an electric field gradient to the particles enabling the particles to be moved under the action of dielectrophoretic forces.

The controller may apply an electric signal to one or more of the electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 1b are two electrodes on the same surface. The two electrodes are indicated in figure 1b in two different dashing styles. There could be more than two electrodes on the same side of the substrate, e.g., to facilitate more fine-grained control of voltage differences across the substrate. The electrodes are applied to a same side of the substrate. Applying electrodes to a substrate may be done lithographically, e.g., using a mask representing the electrodes pattern. Electrodes may also be applied by embedding them in the substrate.

An electrode is electrically connected, e.g., has the same electric potential everywhere. An electrode may comprise a driving bus and main lines. At least, the main lines are interdigitated with main lines of a further electrode. Typically, the electrodes extend in a substantially straight line across the substrate, while the main lines are convoluted.

In an embodiment, the two substrates of a light modulator each have two electrodes arranged at its inner surface. Though, as mentioned, multiple electrodes on one or both substrates are not needed. For example, an embodiment of a light modulator comprises a first substrate and a second substrate. For example, the first substrate may comprise one electrode, the second substrate may not comprise electrodes. For example, the first substrate may comprise two electrodes, the second substrate may comprise one electrode. For example, the first substrate may comprise two electrodes, the second substrate may comprise two electrodes. For example, the first substrate may comprise more than two electrodes, the second substrate may comprise two or more electrodes.

Light modulators, wherein each substrate comprises two electrodes are used as a motivating example, though. Designs of substrates featuring two electrodes may be adapted to have a single electrode, e.g., by connecting the two electrodes, or by removing one of the electrodes. Adapting a substrate in such a manner may make it suitable for use in different technologies.

Each of the multiple electrodes are arranged in a pattern across the substrate. The multiple electrodes are arranged alternatingly with respect to each other on the substrate. Typically, an electrode comprises multiple main lines, that each stretch across the substrate. The main lines of the electrodes alternate, e.g., interdigitate. For example, in figure 1b the first electrode comprises main lines 111-114, and the second electrode comprises main lines 121-124. The electrodes are each driven by its driving bus. Figure 1b shows two driving buses: driving bus 110 and driving bus 120. The electrodes also serve to connect the main lines together. For example, in figure 1b, the driving bus 110 drives and connects main lines 111-114; and the driving bus 120 drives and connects main lines 121-124. There can be more main lines than the four shown in this example. The use of main lines is advantageous as it reduces the length of the electrodes, but it is not necessary. A design using only one main line per electrode is not impossible, though having multiple is advantageous.

The driving buses may be adapted to form a contact area to enable electrical connection to at least the one or more driving electrodes applied on the first substrate, e.g., a connection from outside the light modulator. This is not necessary, and a separate contact area, e.g., additional to driving buses 110 and 120 may be provided as in an embodiment.

The multiple of main lines of the first and second electrode are arranged alternatingly with respect to each other on the substrate.

In this example, there are no other connections between the main lines of an electrode than through the common driving bus. In an embodiment, an electrode comprises a mesh electrode, that is, it may have additional electrical connection which may be added between electrode lines of the same electrode. This increases the reliability of the electrode. Such additional connections typically cross an electrode line of another electrode, which may be resolved by placing the additional electrical connection in part on a different level with respect to the substrate than the electrode line being crossed. For example, one may place the entire electrodes at a different level than another electrode. In this way, additional connections may be placed without short circuits arising.

A motivating application for a substrate such as substrate 100 is in smart glazing, e.g., a light modulator, which may be applied in domestic housing, offices, green houses, cars, and the like. The level of transparency or reflectivity of the smart glazing can be adapted electrically. For example, in smart glazing two substrates such as substrate 100 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two or more electrodes on the other surface of substrate 100, e.g., to facilitate stacking of three or more substrates.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular of diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets the electric field at any part of the substrate can be controlled as two opposite electrodes border the part from two opposing sides.

Interestingly, the pattern in which the electrodes stretch across the substrate may be created by multiple repeated building blocks. Shown in figure 1b, the electrodes on substrate 100 shows four blocks: blocks 141, 142, 143 and 144 which are all substantially the same. The number of building blocks may be larger than four. The building blocks repeat in both directions across the substrate, e.g., a first direction 191, e.g., an x-direction, shown horizontally in the figure, and a second direction 192, e.g., a y-direction, shown vertically in the figure. Using building blocks is advantageous as it allows manufacture using a stepper machine; using building blocks is not necessary.

For example, **figure 1a** schematically shows an example of an embodiment of a building block 140. Building block 140 comprises multiple interdigitated electrodes extending in at least 2 directions across the building block. Shown in figure 1a are four electrodes: electrode 131-134. When the building blocks are repeated across a substrate in two directions, the electrodes in the building block will form the electrodes, e.g., form the multiple main lines of the electrodes. Note that the building blocks are typically connected in a substrate-electrode design tool. Typically, a building block comprises more than four electrode lines. For example, in a range of embodiments between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The electrodes that are formed by repeating building blocks are connected to the driving buses. Typically, electrode lines in a building block are connected to electrode lines in neighboring blocks by mering corresponding electrode lines; this is not necessary though, between repeated building blocks connection zones can be inserted that connect corresponding electrode lines.

This step can connect up multiple of the main lines together thus forming a single electrode. Figure 1b shows two connecting zones 119 and 129 in which the main lines belonging to the same electrode are connected to driving bus 110 and driving bus 120, respectively.

The electrodes that are shown in figure 1a are alternately dashed in the same dashing style of figure 1b. Indeed, it happens to be the case in this example, that a particular electrode of the building block of figure 1a will always end up in the first electrode or in the second electrode, e.g., as indicated in this case by the dashing style. This is, however, not necessarily the case. An electrode in a building block may end up as part of the first electrode or as part of the second electrode. This can change, e.g., as a result of the parity of the number of electrodes in the building block, the pattern in which the building blocks are repeated, etc.

For example, a particular pattern of repeated building blocks may be used for a light modulator with two electrodes, in which one might assign alternating main lines to the two electrodes. However, the same pattern of repeated building blocks may be used for a light modulator with three electrodes, in which one might assign every next set of three main lines to the three electrodes.

Furthermore, the building block shown in figure 1a is square, but this is also not needed. For example, a building block may be rectangular. In an embodiment, building block shape(s) could form a so-called tessellation. For example, a building block may be a triangle, a hexagon or even a combination of plane-filling shapes.

As said, figures 1a and 1b are schematic. This is especially the case for the depiction of the electrodes. An electrode as shown in figure 1a is straight, however, in an embodiment, an electrode on the building block is more convoluted, e.g., curved. By adapting the shape of the electrodes undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates is according to an embodiment. The dimmable mirror may be electrophoretic. Typically, each substrate has two electrodes, but this is not necessary.

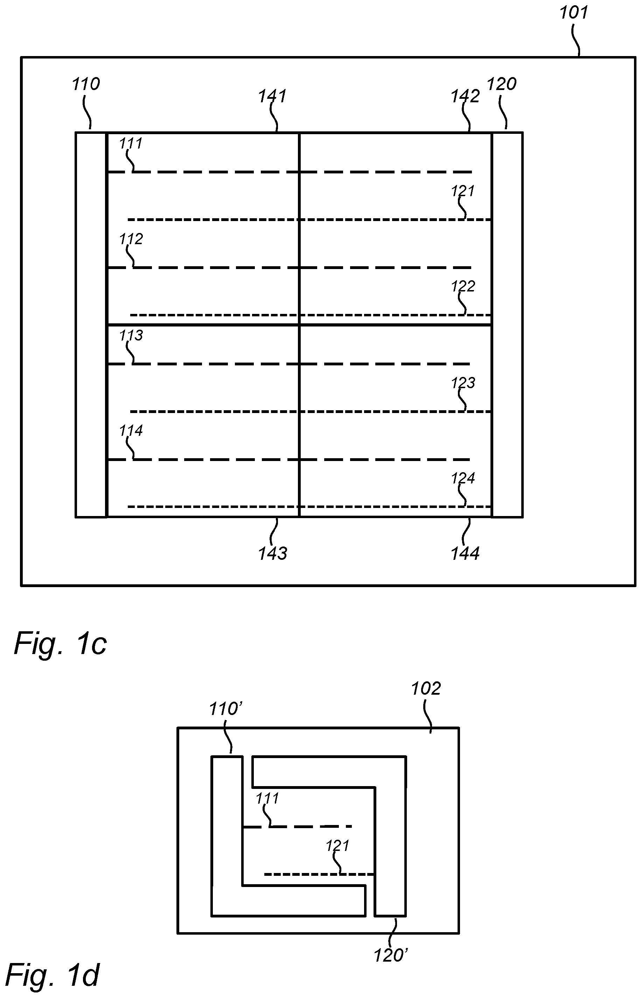

**Figure 1c** schematically shows an example of an embodiment of a substrate 101. Substrate 101 is similar to that of substrate 100, except for how the main lines are connected that formed from the electrodes on the building blocks to the driving buses. In figure 1a, a connection zone is inserted between the repeated building blocks and the driving buses 110 and 120. In the connection zone, the main lines belonging to the same electrode are connected to the same driving bus. In figure 1c, the driving bus is directly adjacent to the building blocks. To avoid that a driving bus connects to a main line of a different electrode, some of the building blocks are modified. Driving buses 110 and 120 may be configured as contact areas.

For example, building block 141 may be a copy of building block 140, but the electrode 134 is shortened so that the main line 122 of which line 134 is a part does not connect to bus 110. In figure 1c the building blocks are substantially the same except that a disconnect is introduced in some electrodes of building blocks next to the driving bus to avoid connecting a main line with the driving bus. Although all building blocks shown in figure 1c are modified in this way, in an embodiment the majority of building blocks would not be modified, e.g., the building blocks that are not adjacent to driving buses 110, 120.

**Figure 1d** schematically shows an example of an embodiment of a substrate 102. In an embodiment, the electrodes in a building block each connect the same opposite sides of the building block. This has the consequence that the main lines that are formed by the electrodes on the building block connect opposite sides of the substrate. In such a situation having only two driving buses, e.g., each extending along an opposite side of the substrate, is sufficient to connect and drive the electrodes.

It is however not required for the electrodes in a building block to connect opposite sides of the building block. Although typically all electrodes in a building block will connect two sides of the building block, it is not required that these two sides are opposite. The reason for this, is that an electrode may be continued by a next building block. In such a situation, most main lines will still connect the same two opposite sides, but at the edge of the substrate this may not happen, as there are no further building blocks there to carry the electrode forward. To allow for more intricate electrode designs on the building blocks, the main line may be connected to a driving bus from two sides, e.g., two sides of the substrate that are adjacent to the same corner of the substrate.

Shown in figure 1d, is a driving bus 110' extending along two sides of the substrate and a driving bus 120' extending along the other two sides of the substrate.

An advantage of this configuration is that the driving buses can be made in the same plane. This is not necessary though. A driving bus could connect from three or all four sides if desired, e.g., to further increase design freedom for the building blocks. Various examples are given herein.

Note that electrodes, e.g., driving buses, and/or main lines are allowed to overlap. This is possible, e.g., by causing a part of dielectric material between the electrodes. For example, such overlapping electrodes could be partly or fully in different planes of the substrate.

For example, in an embodiment one might depose the first electrode. Then locally depose a dielectric, and finally depose a second electrode. The dielectric is arranged to cover at least the points where the first and second electrode cross. A via could be used to the lower first electrode, e.g., to connect to it. The deposing of the electrodes may include the deposing of the driving buses.

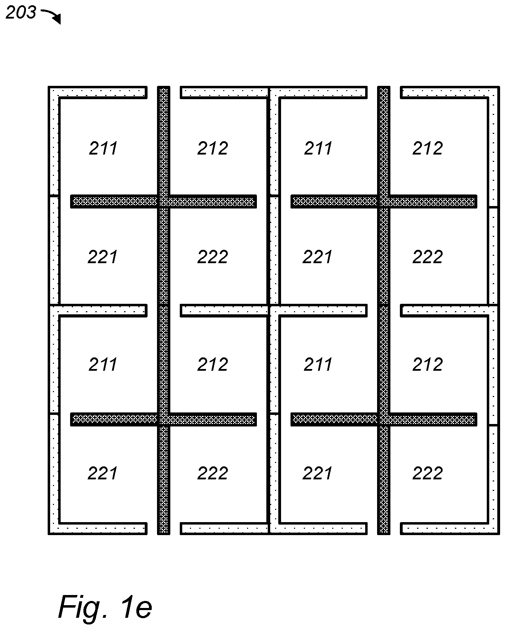

**Figure 1e** schematically shows an example of an embodiment of a substrate 203. In figure 1e, a building block has been copied multiple times.

Building block 211 has been mirrored in the y-direction to form building block 221. Building block 221 has been arranged directly at the bottom of building block 211. Building block 211 has been mirrored in the x-direction to form building block 212. Building block 212 has been arranged directly to the right of building block 211. Building block 211 has been mirrored in the x-direction as well as in the y-direction to form building block 222. For example, the mirroring may have as mirroring axis a side of the building block.

By mirroring the building block, it is ensured that driving buses of the same electrode end up next to each other on the substrate.

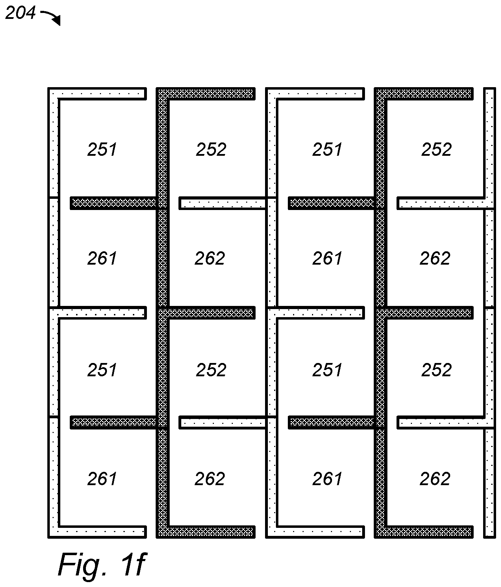

**Figure 1f** schematically shows an example of an embodiment of a substrate 204. In substrate 204 the building block is repeated across the substrate, in a different manner. Building block 251 has been mirrored in the y-direction to form building block 261. Building block 261 has been arranged directly at the bottom of building block 251. Building block 251 has been point reflected, e.g., rotated over 180 degree, to form building block 252. Building block 252 has been arranged directly to the right of building block 251. Building block 251 has been mirrored in the x-direction to form building block 262.

It is also possible to arrange building blocks without mirroring the pattern.

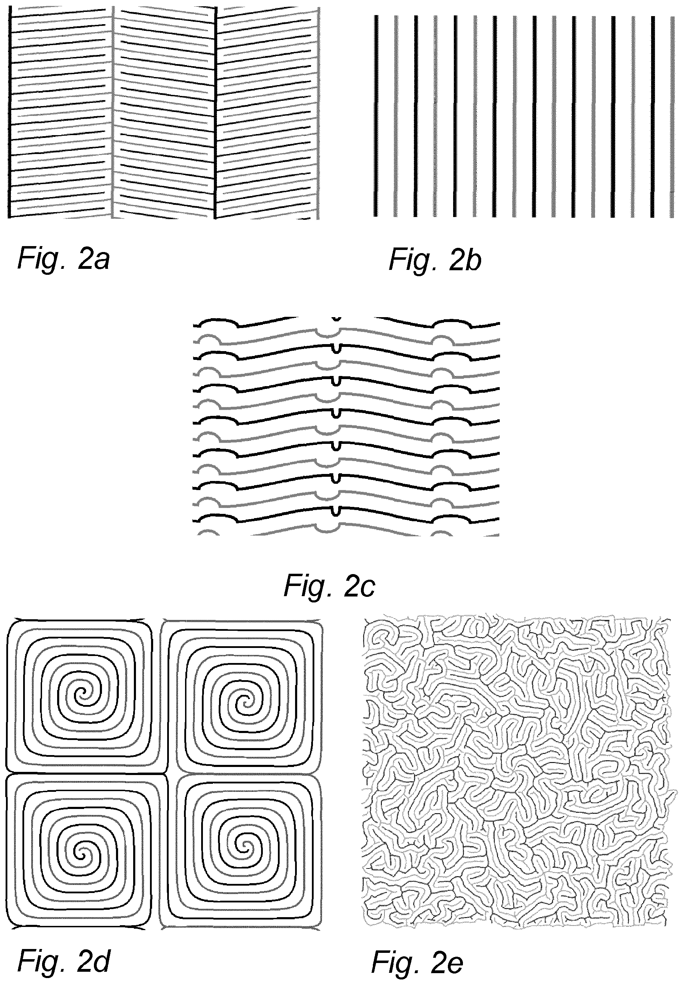

**Figures 2a-2e** schematically show examples of substrates with interdigitated electrodes. These may be embodied on a substrate with two electrodes, e.g., by alternatingly connected electrodes. Figures 2a-2c may also be embodied on a substrate with multiple electrodes, e.g., by connecting in sequences of 3 or 4 or more electrodes.

Figures 2d and 2e show designs with two electrodes on the surface of the substrate. Either design could be modified to have only a single electrode on the surface of the substrate, e.g., by removing one of the two electrodes. For example, such a modified design could be used in a light modulator that uses a substrate with a single electrode.

The designs shown can be realized in a single plane, without having crossing electrodes. In particular if these designs are connected to two driving buses, no crossing electrodes are needed. When more than two electrodes are used, or if more complicated electrode patterns are used, then crossing of the electrodes may be used, or may even become necessary. Such crossings are possible however for example, at the location where two electrode lines cross a dielectric material may be arranged between the electrodes. For example, such an insulator may be deposited at the crossing location. For example, a first electrode is in a first plane of the substrate and a second electrode is in a second plane of the substrate.

Two substrates according to an embodiment may be combined to form a light modulator. The light modulator is particularly suited to glazing. An exemplary embodiment of a light modulator is shown below.

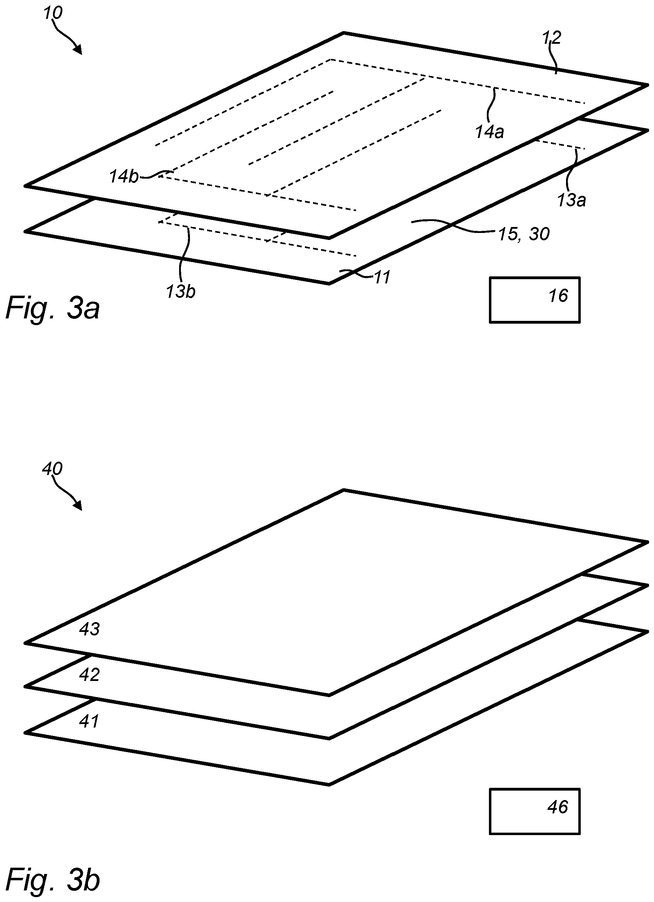

**Figure 3a** schematically shows an embodiment of a light modulator 10, which may be applied in smart glazing.

Reference is made to patent application PCT/EP2020/052379, which is included herein by reference; this application comprises advantageous designs for light modulator, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite to each other. On an inner-side of first substrate 11 at least two electrodes are applied: shown are electrodes 13a, 13b. These at least two electrodes are together referred to as electrodes 13. On an inner-side of second substrate 12 at least two electrodes are applied: shown are electrodes 14a, 14b. These at least two electrodes are together referred to as electrodes 14. One or more of substrates 11 and 12 may be provided with one or more contact areas to enable electrical connection to at least the one or more electrodes applied on the substrate(s).

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule. The fluid may be a liquid.

The electrodes are arranged for driving particles 30 to move towards or away from electrodes, depending on the electric field applied. The optical properties, in particular the transparency or reflectivity of the light modulator depend on the location of particles 30 in the fluid. For example, a connection may be provided for applying an electro-magnetic field to the electrodes.

Light modulator 10 may be provided with one or more continuous spacer walls, e.g., on first substrate 11 and/or on second substrate 12, facing the optical layer.

The electrodes 13 and 14 are shown schematically in the figures. They may be implemented in a number of ways, e.g., as shown in figures 2.

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrate is typically smaller than 30 µm, such as 15 µm. In an exemplary embodiment of the light modulator a distance between the first and second substrate is smaller than 500 µm, preferably smaller than 200 µm, preferably less than 100 µm, even more preferably less than 50 µm, such as less than 30 µm.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semiconducting materials.

In an exemplary embodiment of the light modulator the particles are adapted to absorb light with a wavelength of 10 nm-1 mm, such as 400-800 nm, 700 nm -1 µm, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1e to 10e per particle (5*10⁻⁷-0.1 C/m²).

In an exemplary embodiment of the light modulator the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator the particles are present in an amount of 0.01-70 g/m², preferably 0.02-10 g/m², such as 0.1 -3 g/m².

In an exemplary embodiment of the light modulator the particles have a color selected from cyan, magenta, and yellow, and from black and white, and combinations thereof.

The light modulator can be also configured to only, or primarily, modulate non-visible light such UV or near-IR, e.g., respectively in the range of about 10 nm-380 nm, and in the range of about 750 nm - 1 µm.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator the fluid has a relative permittivity □r of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 nOhm.m (at 272K; for comparison typically used ITO has 105 nOhm.m), which is similar to an electrical conductivity >1*10⁷ S/m at 20°C).

In an embodiment of the light modulator, electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electro-magnetic field to the electrodes, wherein the applied electro-magnetic field to the electrodes provides movement of the nano- and microparticles from a first electrode to a second electrode and vice versa. A connection for applying an electro-magnetic field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller 16. The controller 16 may be connected to the contact areas of the light modulator.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electro-magnetic field. As such also the appearance of the light modulator, or one or more parts thereof, may be changed. For example, a segment may have an area of at least 1 mm². The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates 11, 12 are aligned, and/or electrodes 13, 14 are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11, 12 of a first light modulator is the same as a substrate 11, 12 of at least one second light modulator. For stacked modulators, alignment may also increase maximum transparency or reflectivity, but it may be detrimental to other considerations, e.g., diffraction.

**Figure 3b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 3a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 is configured to control electrical current on the electrodes of the substrates. For example, in figure 3b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with a contact area for electrical connection to the electrodes, e.g., for control by controller 46.

Light modulator 40 may be provided with one or more continuous spacer walls, e.g., on first substrate 41 facing second substrate 42, on second substrate 42 facing first substrate 41, on second substrate 42 facing third substrate 43, and/or on third substrate 43 facing second substrate 42.

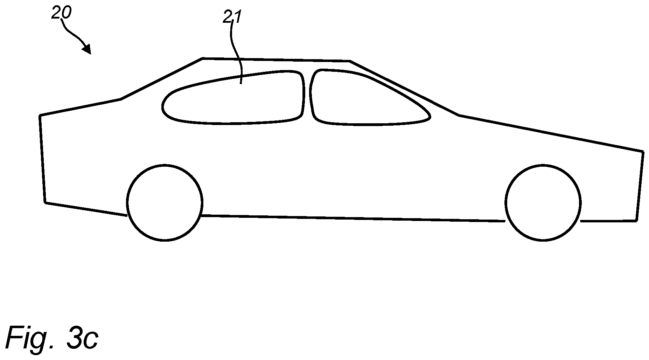

**Figure 3c** schematically shows an example of an embodiment of a car 20 having smart glazing for windows 21. This is a particularly advantageous embodiment, since while driving the level of incident lighting can change often and rapidly. Using smart glazing in a car has the advantage that light levels can be maintained at a constant level by adjusting the transparency of the car windows. Moreover, the reduced diffraction effect improves safety as it reduces driver distraction. Car 20 may comprise a controller configured for controlling the transparency or reflectivity of windows 21.

Smart glazing can also be used in other glazing applications, especially, where the amount of incident light is variable, e.g., buildings, offices, houses, green houses, skylights. Skylights are windows arranged in the ceiling to allow sunlight to enter the room.

The light modulator may have two optical states, e.g., a transparent state and a non-transparent state, or a non-reflective state and a reflective state. The light modulator, e.g., light modulator 10 or light modulator 40 may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate is provided.

A driving signal applied to electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

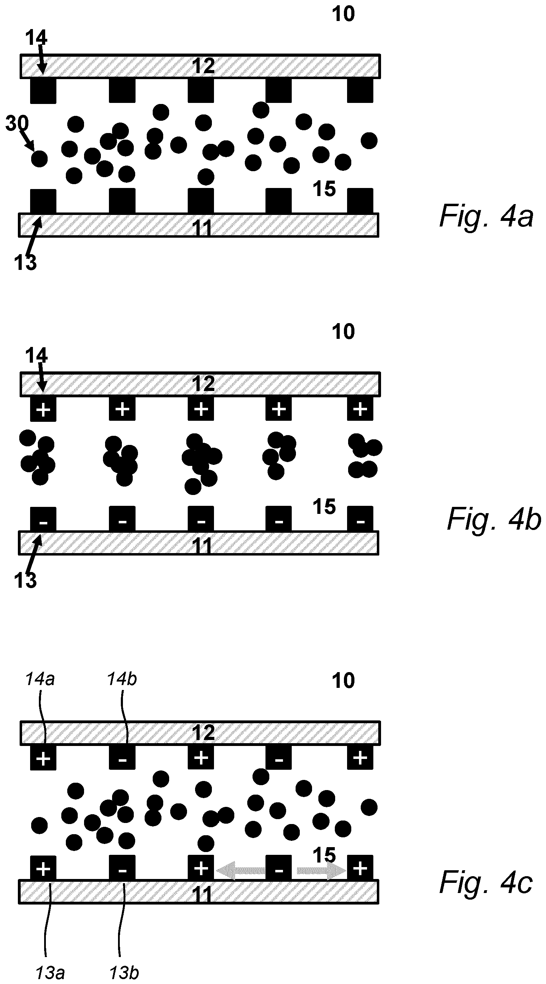

**Figures 4a-4b** schematically show a side view of an embodiment of a light modulator in use. In this figure only the electrodes are shown. The contact area(s) are not separately shown in these figures.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: at least two for each substrate. But more electrodes may be used and connected to the controller; for example, more than two electrodes may be used for a substrate to better fine-tune grayscaling and driving to non-transparent or reflective state. Multiple electrodes may also be used to support multiple segments on the substrate.

**Figure 4a** shows the light modulator without an electric field being applied. No electric force is yet applied on particles 30 suspended in fluid 15, in figure 4a.

In the configuration shown in figure 4a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 4b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency can be achieved, when in a second instance, P2, of the on-state, the voltages of the top electrodes and bottom electrodes are reversed in contrast to the instance of P1. In the instance P2, the voltage of each electrode on of the top substrate are now supplied with a negative potential -V1 while the voltages of the aligned electrodes of the bottom substrate are supplied with a positive potential. This state is similar to the state shown in figure 4b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 4b (and a negative potential on electrodes 14), and a positive potential at electrodes at the bottom substrate, e.g., as shown as electrodes 14 in figure 4b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form for example, when using copper electrodes, since copper ions dissolve in an ionic fluid at one substrate and flow to electrode on the opposite substrate, where they deposit. By applying a waveform, the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

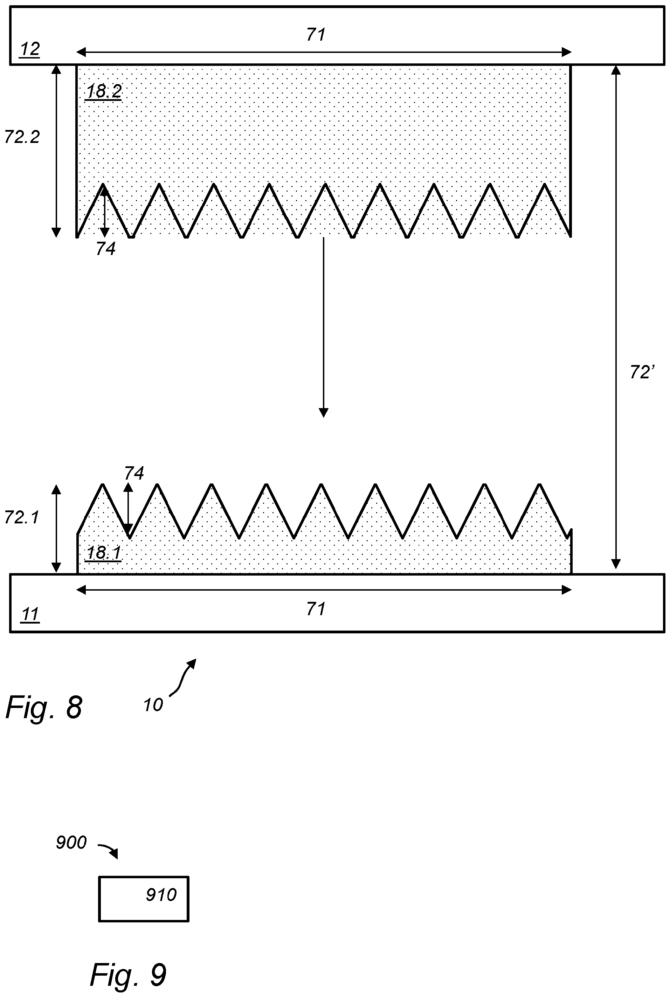

**Figure 4c** shows how a state of decreased transparency or increased reflectivity can be obtained. An alternating voltage is applied on the same substrate. For example, in an embodiment a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 4c, wherein four electrodes are indicated with the reference numbers 13a, 13b, 14a and 14b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 4b, a waveform may be applied to the electrodes, e.g., so that electrodes that are shown in figure 4b with a positive potential become negative and vice versa. As in figure 4b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 1a, 1b, 2a-2e, etc.

The extent with which transparency or reflectivity is increased or decreased in figures 4b and 4c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1 mm. Note that no pixilation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent off-set in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color-point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less responsive to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with a different resistance will give rise to a different electric field. For example, ITO will have a smaller electric field, even though driven with the same voltage.

An embodiment of a method of modulating light comprises applying an electric potential to multiple electrodes applied to two opposing substrates according to an embodiment to obtain an electro-magnetic field between the multiple electrodes providing electrophoretic movement of the particles towards or from one of the multiple electrodes causing modulation of light shining through the substrates, wherein the two opposing substrates are as in an embodiment.

Light modulator 10 may be provided with one or more continuous spacer walls, e.g., on first substrate 11 and/or on second substrate 12, facing the optical layer.

Various modes of operation are supported by an embodiment of a four-electrode light modulator system.

### Horizontal drive

Horizontal drive is a mode in which lateral electric fields are created along the substrate. The light modulator may apply alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

### Maintaining a grayscale

The light modulator drive system may apply 0 voltage on the electrodes most of the time, but if the grayscale is dropping, due to the particles dispersing, then briefly the electrodes and may be driven as in vertical drive.

In all three modes, the driving may use DC or AC signals. Preferably, AC signals are used.

**Figure 5a-5d** schematically show examples of embodiments of a substrate 11 for use in an embodiment of a light modulator according to an embodiment.

**Figure 5a** schematically shows an example of a substrate 11. Substrate 11 may be for use in a light modulator 10 according to an embodiment. Light modulator 10 may comprise substrate 11 as a first substrate 11. Light modulator 10 may further comprise a second substrate 12, which may be arranged opposite first substrate 11. Light modulator 10 may further comprise at least one electrode 13a, 13b applied to at least first substrate 11 on a surface facing second substrate 12. Light modulator 10 may further comprise an optical layer 17 extending between first substrate 11 and second substrate 12. Optical layer 17 may comprise a fluid 15 comprising particles 30. Fluid 15 may be a liquid 15. The liquid 15 may comprise ink. Particles 30 may comprise ink particles 30. Light modulator 10 may be configured to apply an electric potential to the at least one electrode 13a, 13b, causing modulation of an electric field in optical layer 17. The modulation of the electric field in optical layer 17 may provide electrophoretic and/or dielectrophoretic movement of particles 30 in optical layer 17. The electrophoretic and/or dielectrophoretic movement may cause modulation of light passing through optical layer 17.

Light modulator 10 may further comprise one or more continuous spacer walls 18a, 18b. The spacer walls 18a, 18b may extend across first substrate 11 and second substrate 12. Spacer walls 18a, 18b may define a gap of optical layer 17 between first substrate 11 and second substrate 12. Spacer walls 18a, 18b may thereby act as a spacer, spacing first substrate 11 and second substrate 12 apart from each other.

Spacer walls 18a, 18b may comprise continuous, uninterrupted, uniform and/or monolithic structures. The amount of spacer walls 18a, 18b may be limited, e.g., limited to the number of electrodes on the substrate on which the spacer walls 18a, 18b may be applied, for example, to one or two spacer walls 18a, 18b. In addition to their function as spacers, spacer walls 18a, 18b may add to the stability, e.g., the stability of the comprised fluid, e.g., ink. Furthermore, spacer walls 18a, 18b may add to the robustness of light modulator 10.

Spacer walls 18a, 18b may have a width of, e.g., at least 1 µm, preferably at least 2 µm, more preferably at least 5 µm. For example, the width of spacer walls 18a, 18b may be 7 µm. A width of spacer walls 18a, 18b may be a constant width. A width of spacer walls 18a, 18b may vary along a length of spacer walls 18a, 18b.

Spacer walls 18a, 18b may have a length which is at least as long as a smaller one of a length and a width of first substrate 11 and the second substrate 12. A length of spacer walls 18a, 18b may be at least as long as the length of first substrate 11, at least as long as the width of first substrate 11, at least as long as the length of second substrate 12, and/or at least as long as the width of second substrate 12. A length of a spacer wall 18a, 18b may be the length of an electrode, e.g., an electrode arranged on the same substrate. A length of a spacer wall 18a, 18b may be, for example, at least 1cm, e.g., at least 10 cm.

Spacer walls 18a, 18b may have a height of, e.g., at least 1 µm, preferably at least 5 µm, preferably at least 10 µm, more preferably at least 20 µm. For example, the height of spacer walls 18a, 18b may be between 25 µm and 30 µm. A height of spacer walls 18a, 18b may be equal to a width of the gap between first substrate 11 and second substrate 12. A height of spacer walls 18a, 18b may be a constant height. A height of spacer walls 18a, 18b may vary along a length of spacer walls 18a, 18b. A variation of the height of spacer walls 18a, 18b may stay within 5%, more preferably within 1%. The variation may be with respect to an average height of spacer walls 18a, 18b; for example, an average height over the length of spacer walls 18a, 18b. The variation may be with respect to a minimum height, a maximum height, or a sum of a minimum height and a maximum height.

One or more continuous spacer walls 18a, 18b may follow along at least part of the at least one electrode 13a, 13b. As may be seen in Figure 5a, in an embodiment, the at least one electrode 13a, 13b may comprise two or more electrodes 13a, 13b, which may be interdigitated electrodes 13a, 13b. At least part of the one or more continuous spacer walls 18a, 18b may be positioned on top of at least part of the electrodes 13a, 13b. For example, at least 50%, preferably more than 80%, more preferably more than 90%, of spacer walls 18a, 18b may be positioned on top of at least part of electrodes 13a, 13b. A spacer wall 18a out of the one or more continuous spacer walls 18a, 18b may be positioned on one of the electrodes 13a, 13b, namely, electrode 13a. Correspondingly, a spacer wall 18b out of the one or more continuous spacer walls 18a, 18b may be positioned on one of electrodes 13a, 13b, namely, electrode 13b. The part of the one or more continuous spacer walls 18a, 18b following along the part of electrodes 13a, 13b may do this along a length of the part of the electrodes 13a, 13b. The part of the one or more continuous spacer walls 18a, 18b following along the part of the electrodes 13a, 13b may adopt the shape of the electrodes 13a, 13b along the length of the part of the electrodes 13a, 13b. For example, the one or more continuous spacer walls 18a, 18b may be bifurcated. Bifurcations 19 in the one or more continuous spacer walls 18a, 18b may follow bifurcations 19 of the electrodes 13a, 13b. This way, for example, the bifurcated spacer wall 18a may follow the bifurcations 19 of the electrode 13a.

It may also be that the light modulator 10 may comprise one or more continuous spacer walls 18a, 18b which do not follow along at least part of the at least one electrode 13a, 13b. For example, it may be the case that one or more continuous spacer walls 18a, 18b follow an opposite direction of the at least one electrode 13a, 13b; the one or more one or more continuous spacer walls 18a, 18b may cross one or more out of the at least one electrode 13a, 13b. It may also be the case that the one or more continuous spacer walls 18a, 18b do not cross at least part of the at least one electrode 13a, 13b.

A width of the part of the one or more continuous spacer walls 18a, 18b being positioned on top of at least part of the electrodes 13a, 13b may not exceed a width of the electrodes 13a, 13b. A width of the spacer walls 18a, 18b may be strictly smaller than a width of the electrodes 13a, 13b. For example, a width of the electrodes 13a, 13b may be 10 µm. A width of the spacer walls 18a, 18b may be, for example, 7 µm. By spacer walls 18a, 18b being narrower than the electrodes 13a, 13b, there is space left for the particles in the fluid 15, e.g., ink to accumulate, when the at least one electrode 13a, 13b is driven. By this, optical properties of light modulator 10 may be optimized.

A ratio of a ground area on a substrate which may be covered by the one or more continuous spacer walls 18a, 18b to a ground area on the same substrate which may be covered by the at least one electrode 13a, 13b may be between 50% and 90%, preferably between 60% and 80%, more preferably between 65% and 75%. It may be that spacer walls 18a, 18b are only positioned on top of electrodes 13a, 13b, and that the spacer walls 18a, 18b are not placed between the electrodes 13a, 13b. It may then be that the ground area which is not covered by the at least one electrode 13a, 13b is not covered by the one or more continuous spacer walls 18a, 18b either. If, for example, a width of the electrodes 13a, 13b is 10 µm, and a width of the spacer walls 18a, 18b is 7 µm, and the area on substrate 11 as shown in Figure 5a is considered, in which area all shown spacer walls 18a, 18b are positioned on the electrodes 13a, 13b; then, the ratio of the ground area covered by spacer walls 18a, 18b to the ground area covered by electrodes 13a, 13b is 70%.

A light modulator according to an embodiment may be considered, wherein at least part of the one or more continuous spacer walls 18a, 18b is positioned on top of at least part of the at least one electrode 13a, 13b, and wherein a ratio of a ground area covered by the one or more continuous spacer walls 18a, 18b to a ground area covered by the at least one electrode 13a, 13b is between 50% and 90%, preferably between 60% and 80%, more preferably between 65% and 75%.

**Figure 5b** schematically shows another example of a substrate 11. As may be seen in Figure 5b, the at least one electrode 13a, 13b may comprise two or more electrodes 13a, 13b, which may be interdigitated electrodes 13a, 13b. In this embodiment, the one or more continuous spacer walls 18a, 18b may follow along at least part of the electrodes 13a, 13b as follows. Spacer walls 18a, 18b may be, at least in part, placed in between the two or more interdigitated electrodes 13a, 13b. For example, at least 50%, preferably more than 80%, more preferably more than 90%, of spacer walls 18a, 18b may be placed in between electrodes 13a, 13b. The part of the spacer walls 18a, 18b being placed in between the electrodes 13a, 13b may be placed at a distance 75 from a nearest electrode 18b out of the electrodes 18a, 18b. For example, the distance 75 of the part of the spacer walls 18a, 18b being placed in between the electrodes 13a, 13b from a nearest electrode 18b out of the electrodes 18a, 18b may be a distance 75 of, e.g., at most 10 µm, preferably at most 7 µm, more preferably at most 5 µm, from the nearest electrode 18b out of the electrodes 18a, 18b.

As may be seen in Figure 5b, a spacer wall 18a out of the one or more continuous spacer walls 18a, 18b may be placed between an electrode 13a out of the at least two interdigitated electrodes 13a, 13b and an electrode 13b out of the at least two interdigitated electrodes 13a, 13b. The part of spacer wall 18a, 18b being placed between the electrodes 13a and 13b may do this along a length of the part of the electrodes 13a and 13b. The part of the spacer wall 18a, 18b being placed between electrodes 13a and 13b may adopt a shape which may be an intermediate shape of electrodes 13a and 13b along the length of the part electrodes 13a and 13b. For example, the shape of spacer wall 18a may be such that it is determined by the shape of electrodes 13a and 13b, and the intermediate shape may be described as maintaining a certain distance of, for example, at most 10µm from a nearest electrode out of electrodes 13a and 13b. The shape of spacer wall 18a may follow a bifurcation 19 of an electrode 13b by, for example, following a turn in the available space created by and/or near the bifurcation 19 in the electrode 13b.

In manufacturing light modulator 10, additional floating metallization may be used. Additional floating metallization may be used, for example, for parts of spacer walls 18a, 18b being placed between electrodes 13a, 13b. The additional floating metallization may be used to shadow a possible transparency of the spacer walls 18a, 18b, for example, for the parts of spacer walls 18a, 18b being placed between electrodes 13a, 13b. The additional floating metallization may be used if it is deemed optically necessary, for example, to optimize the optical properties of light modulator 10.

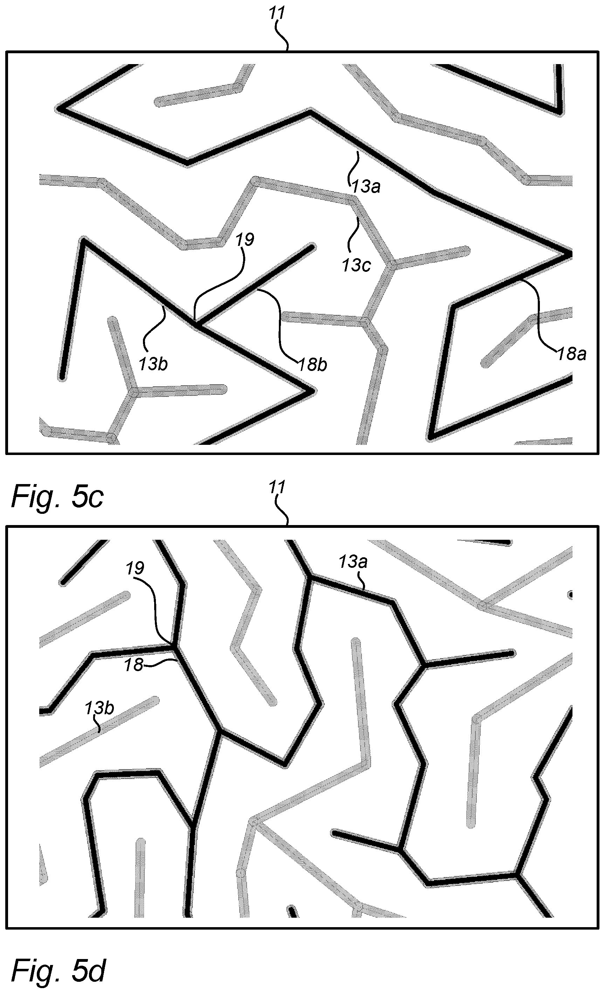

**Figure 5c** schematically shows an example of a substrate 11. In this embodiment, as may be seen in the figure, not all of the shown electrodes 13a, 13b out of the at least one electrode 13a, 13b may have a spacer wall 18a, 18b positioned on them. For example, on electrode 13a a spacer wall 18a may be positioned. Spacer wall 18a may be aligned with electrode 13a, may follow electrode 13a along the length of electrode 13a, and may adopt the shape of electrode 13a along the length of electrode 13a. Analogously, on electrode 13b a spacer wall 18b may be positioned, which may be aligned with electrode 13b, may follow electrode 13b along the length of electrode 13a, and may adopt the shape of electrode 13b along the length of electrode 13b, for example, in bifurcations 19 of electrode 13b, which spacer wall 18b also follows by being bifurcated at bifurcations 19. Between the two interdigitated electrodes 13a, 13b, a third electrode 13c may be positioned. Electrode 13c may not have a spacer wall 18a, 18b positioned on the electrode 13c. A pattern may be constructed, in which electrodes 13a, 13b out of the at least one electrode 13a, 13b, 13c which may have a spacer wall 18a, 18b positioned on them, may be separated from each other by at least one electrode 18c out of the at least one electrode 13a, 13b, 13c on which may have no spacer wall positioned on them. For example, on a substrate 11, two electrodes 13a, 13b may be applied, which are interdigitated. One electrode 13a out of the two electrodes 13a, 13b applied on the substrate 11 may have a continuous spacer wall 18a positioned on the electrode 13a; the other electrode 13b may not have a continuous spacer wall positioned on the electrode 13b.

**Figure 5d** schematically shows an example of a substrate 11. In this embodiment, as may be seen in the figure, not all of the shown electrodes 13a, 13b out of the at least one electrode 13a, 13b may have a spacer wall 18 positioned on them. For example, on electrode 13a a spacer wall 18 may be positioned. Spacer wall 18 may be aligned with electrode 13a, may follow electrode 13a along the length of electrode 13a, and may adopt the shape of electrode 13a along the length of electrode 13a. Analogously, on electrode 13b there may be no spacer wall positioned. It may be noticed that a single spacer wall 18 may cover a region spread over the entire shown surface of substrate 11 in Figure 5d. This may at least be due to a large number of bifurcations 19 of electrode 13a, which spacer wall 18 also follows by being bifurcated at bifurcations 19. As shown in Figure 5d, electrode 13a may be interdigitated with a number of other electrodes 13b, etc. The other electrodes 13b, etc. may not have a spacer wall 18 positioned on them. This way, a pattern may be constructed, in which a first electrode, say 13a, out of the at least one electrode 13a, 13b, etc. may have a spacer wall 18 positioned on them, and the electrodes 13b, etc. which may be interdigitated with the first electrode 13a may not have a spacer wall 18 positioned on them.

Multiple configurations can be used for a light modulator. We will assume a four electrodes light modulator, having two electrodes arranged across each of the two substrates. This is not necessary though. For example, a light modulator may have electrodes on only one side, e.g., two, or the light modulator may have electrodes on both sides, but not two on each substrate, e.g., two electrodes versus one, or the light modulator may have more than two electrodes on one or both substrates; for example, one substrate may have three electrodes while the other has one, two or three electrodes.

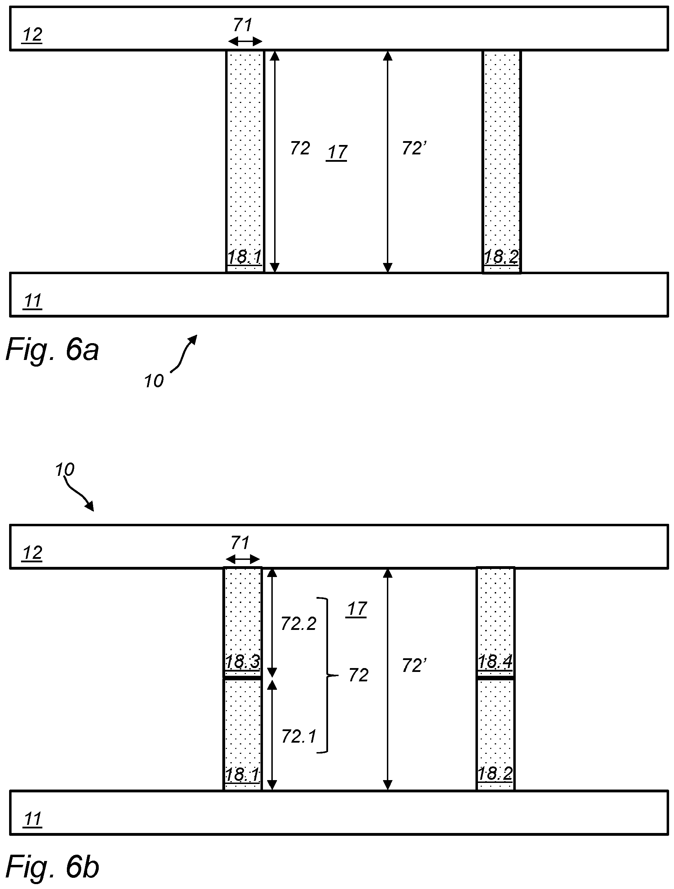

**Figure 6a-6c** schematically show side-views of examples of embodiments of a light modulator 10. Light modulator 10 may comprise a first substrate 11 and a second substrate 12. First substrate 11 and second substrate 12 may be according to an embodiment. First substrate 11 and second substrate 12 may be arranged with inner sides opposite to each other.

At least one of first substrate 11 and second substrate 12 may be transparent to the light wavelength intended to be modulated. Typically, both substrates 11, 12 may be transparent, and may be used, e.g., in automotive and building applications. One substrate out of substrates 11, 12 may be transparent, and one substrate out of substrates 11, 12 non-transparent substrate may be combined, e.g., in a smart mirror. One or more continuous spacer walls 18.1, 18.2 may be applied on at least one of the first substrate 11 and the second substrate 12. In an embodiment, the one or more continuous spacer walls 18.1, 18.2 may be transparent.

One or more driving electrodes 13, 13a, 13b, 14, 14a, 14b may be applied to the inner side of at least the first substrate 11. One or more driving electrodes 13, 13a, 13b, 14, 14a, 14b may also be applied to the inner side of the second substrate 12. In a preferred embodiment, each substrate out of the substrates 11, 12 may have at least two driving electrodes 13, 13a, 13b, 14, 14a, 14b on its inner side.

The shown light modulator 10 may have an optical layer 15 arranged between first substrate 11 and second substrate 12. One or more driving electrodes 13, 13a, 13b, 14, 14a, 14b on the first substrate 11 and the second substrate 12 may be configured to modulate optical properties of optical layer 17. For example, in a preferred embodiment optical layer 17 may comprise a fluid 15 comprising particles 30. Light modulator 10 may be configured to apply an electric potential to the one or more electrodes to obtain an electric field at the one or more electrodes 13, 13a, 13b, 14, 14a, 14b providing movement of the particles 30 towards or from the one more electrodes 13, 13a, 13b, 14, 14a, 14b, causing the modulation of optical properties; e.g., transition from a high-transparent state to a low-transparent state and vice versa.

The first substrate 11 and the second substrate 12 may be aligned with each other. The first substrate 11 and the second substrate 12 may be horizontally aligned with each other. The first substrate 11 and the second substrate 12 may be arranged opposite of each other in a parallel manner, or a nearly parallel manner. The first substrate 11 and the second substrate 12 may also be vertically aligned with each other. The substrates 11, 12 may be shifted with respect to each other, as long as part of the first substrate 11 and part of the second substrate 12 remain arranged opposite of each other.

In **Figure 6a****,** two continuous spacer walls 18.1, 18.2 are shown. Spacer walls 18.1 and 18.2 may extend across the first substrate 11 and the second substrate 12. Spacer walls 18.1 and 18.2 may in principle be arranged anywhere on an area of the first substrate 11 and the second substrate 12. Spacer walls 18.1, 18.2 need not be positioned near an edge of a substrate 11, 12; for example, spacer walls 18.1, 18.2 may be positioned in the vicinity of the middle of a substrate, or anywhere in between the middle and an edge of a substrate 11, 12. Spacer walls 18.1 and 18.2 may define a gap 72' of the optical layer 17 between the first substrate 11 and the second substrate 12. Spacer walls 18.1 and 18.2 may be of a height 72. Spacer walls 18.1 and 18.2 may be of a same height 72. Spacer walls 18.1 and 18.2 may be of a different height. A height 72 of the spacer walls 18.1, 18.2 may equal a width of the gap 72' between the first substrate 11 and the second substrate 12. Furthermore, spacer walls 18.1 and 18.2 may be of a width 71. Spacer walls 18.1 and 18.2 may be of a same width 71. Spacer walls 18.1 and 18.2 may be of a different width. A width 71 of the spacer walls 18.1, 18.2 may be a constant width 71. A width 71 of the spacer walls 18.1, 18.2 may vary along a length of the spacer walls 18.1, 18.2. A varying width 71 of the spacer walls 18.1, 18.2 may lead to diffraction of light in the light modulator 10.

In **Figure 6b****,** two continuous spacer walls are shown. A first spacer wall may comprise two halves 18.1, 18.3, and a second spacer wall may comprise two halves 18.2, 18.4. One may regard the spacer walls as comprising four distinct spacer walls 18.1, 18.2, 18.3, 18.4 as well, wherein spacer walls may be applied at both substrates 11 and 12: two spacer walls applied at the first substrate 11, and two spacer walls applied at the second substrate 12. The two spacer walls applied at the first substrate 11 and the two spacer walls applied at the second substrate 12 may then face each other.

As may be seen in Figure 6b, a first half 18.1 of the first spacer wall may be applied on the first substrate 11, and a corresponding second half 18.3 of the first spacer wall may be applied on the second substrate 12. Correspondingly, a first half 18.2 of the second spacer wall may be applied on the first substrate 11, and a corresponding second half 18.4 of the second spacer wall may be applied on the second substrate 12. The first halves 18.1, 18.2 of the spacer walls may be vertically aligned with the second halves 18.3, 18.4 of the spacer walls. The spacer walls may define a gap 72' of the optical layer 17 between the first substrate 11 and the second substrate 12. The spacer walls and 18.2 may be of a height 72. The height 72 of a spacer wall may be constructed by adding a height 72.1 of the first half 18.1 of the spacer wall and a height 72.2 of the second half 18.3 of the spacer wall. The height 72.1 of the first half 18.1 of the spacer wall and the height 72.2 of the corresponding second half 18.3 of the spacer wall may add up to a width of the gap 72' between the first substrate 11 and the second substrate 12. The total height 72 then may be equal to the width of the gap 72' of the optical layer 17 between the first substrate 11 and the second substrate 12.

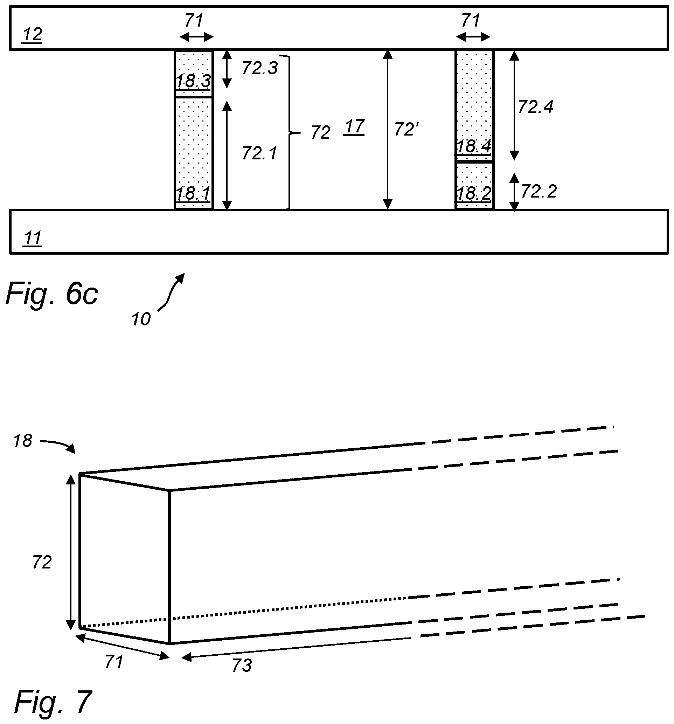

In **Figure 6c****,** two continuous spacer walls are shown as in Figure 6b. Figure 6c differs from Figure 6b in the heights of the halves of the spacer walls. Spacer wall halves may be placed at both substrates, but may not necessarily share height. The spacer wall halves 18.1, 18.2, 18.3 and 18.4 may be of corresponding heights 72.1, 72.2, 72.3 and 72.4, respectively. A height 72 of a first spacer wall may be formed by adding the height 72.1 of the first half 18.1 of the spacer wall and a height 72.3 of the second half 18.3 of the spacer wall. The height 72.1 of the first half 18.1 of the spacer wall and the height 72.3 of the corresponding second half 18.3 of the spacer wall may add up to a width of the gap 72' between the first substrate 11 and the second substrate 12. The total height 72 then may be equal to the width of the gap 72' of the optical layer 17 between the first substrate 11 and the second substrate 12. Spacer wall halves 18.1 and 18.2 may be of different heights 72.1 and 72.2, respectively. Spacer wall halves 18.3 and 18.4 may be of different heights 72.3 and 72.4, respectively. Still, the height 72.2 of the first half 18.2 of the second spacer wall and the height 72.4 of the corresponding second half 18.4 of the second spacer wall may also add up to the width of the gap 72' between the first substrate 11 and the second substrate 12, as may be the case for the first spacer as well.

**Figure 7** schematically shows examples of an embodiment of a spacer wall 18 in a side view. Spacer wall 18 may comprise a continuous, uninterrupted, uniform and/or monolithic structure. Spacer wall 18 may be of a rectangular shape, for example, a rectangular cuboid.

Preferably, the spacer wall 18 is of a constant height 72. Spacer wall 18 may have a height of, e.g., at least 6 µm, preferably at least 10 µm, more preferably at least 20 µm. For example, the height 72 of spacer wall 18 may be between 25 µm and 30 µm. A spacer wall 18 may be of two or more heights. In an embodiment, the height 72 of spacer wall 18 may vary along a length of spacer wall 18. A variation of the height 72 of spacer wall 18 may stay within 5%, more preferably within 1%. The variation may be with respect to an average height of spacer wall 18, e.g., an average height over a length of spacer wall 18. The variation may be with respect to a minimum height, a maximum height, a sum of a minimum height and a maximum height, etc. Analogously, the height 72 of spacer wall 18 may vary along a width of spacer wall 18 as well.

The spacer wall 18 may have two heights 72. In an embodiment, a height 72 of spacer walls 18 may vary along a length of spacer walls 18. A variation of the height 72 of spacer wall 18 may may stay under a maximum deviation of a reference height. A variation of height 72 of spacer wall 18 may stay within 5%, more preferably within 1%. The variation may be with respect to an average height of spacer wall 18; for example, an average height over the length of spacer walls 18. The variation may be with respect to a minimum height, a maximum height, or a sum of a minimum height and a maximum height.

Spacer wall 18 may have a width 71 of, e.g., at least 1 µm, preferably at least 2 µm, more preferably at least 5 µm. For example, the width 71 of spacer wall 18 may be 7 µm. A width of spacer wall 18 may be a constant width. A width 71 of spacer wall 18 may vary along a length of spacer wall 18.

Spacer wall 18 may have a length 73 which is at least as long as a smaller one of a length and a width of a substrate 11, 12, e.g., a substrate on which spacer wall 18 may be applied. A length 73 of spacer wall 18 may be at least as long as the length of a substrate 11, 12, and/or at least as long as the width of a substrate 11, 12.

Multiple spacer walls 18 may be of two or more different heights. Spacer walls 18 may be applied on one or both of opposite substrates 11, 12. Spacer walls 18 applied on one substrate 11 of both substrates 11, 12 may be of a different height than spacer walls 18 applied on the other substrate 12 of both substrates 11, 12. Spacer walls 18 which may be applied on one substrate 11 out of the substrates 11, 12 may be aligned with corresponding spacer walls 18 which may be applied on substrate 12 out of the substrates 11, 12. For a spacer wall 18 which may be applied on a substrate 11, a corresponding spacer wall 18 which may applied on an opposing substrate 12 may be one of the spacers walls 18 which may be applied at substrate 12 which may be closest in distance, using a Riemannian distance in the 3D space and/or a Hausdorff distance between the spacer walls in substrate 11 and the spacer walls in substrate 12. Spacer walls 18 may have different heights, size and/or shapes. Spacer walls 18 may have different rectangular shapes, e.g., a rectangular cuboid. Spacer walls 18 may have softened corners, by which the shape may become more hill-shaped. Combinations of size, height and/or shapes may be used for spacer walls 18, by which the spacer walls 18 may differ in both size, height and/or shape.

Spacer walls 18 of a first height may be comprised in a first substrate 11, and spacer walls 18 of a second height 72 may be comprised in a second substrate 12. The first and the second height 72 may be different from each other. This means that spacer walls 18 in first substrate 11 may be of a separate height 72 from spacer walls 18 in second substrate 12. A sum of at least a part of heights 72 of corresponding spacer walls 18 in the first substrate 11 and in the second substrate 12 may add up to a width 72' of a gap between the first substrate 11 and the second substrate 12.

**Figure 8** schematically shows an example of an embodiment of a first substrate 11 and a corresponding second substrate 12 for use in a light modulator 10. A first spacer wall 18.1 may be applied on the first substrate 11. A first spacer wall 18.2 may be applied on the second substrate 12. The first spacer wall 18.1 may have a first maximal height 72.1, and a width 71. The second spacer wall 18.2 may have a second maximal height 72.2, and a width 71. The first maximal height 72.1 and the second maximal height 72.2 may be equal to each other. The first maximal height 72.1 and the second maximal height 72.2 may be different from each other. The width 71 of the first spacer wall 18.1 and the second spacer wall 18.2 may be equal to each other. The width 71 of the first spacer wall 18.1 and the second spacer wall 18.2 may be different as well. As may be seen in Figure 8, a height of a spacer wall may vary along the width of a spacer wall. The height of the first spacer wall 18.1 and the height of the second spacer wall both vary along the width 71. There may be a variation 74 in the height of the first spacer wall 18.1, and/or a variation 74 in the height of the second spacer wall 18.2. A magnitude of a variation 74 of the height of the first spacer wall 18.1 may be equal to a magnitude of a variation 74 of the height of the second spacer wall 18.2. Variations 74 in height of the spacer walls 18.1, 182. may also be different from each other, for example in magnitude. Variations 74 in the heights 72.1, 72.2 of the spacer walls 18.1, 18.2 may stay within 5%, more preferably within 1%. The variations 74 may be with respect to the maximal height 72.1 of the first spacer wall 18.1, the maximal height 72.2 of the second spacer wall 18.2, an average height of the first spacer wall 18.1 and/or an average height of the second spacer wall 18.2. The average heights may comprise, e.g., an average height over a total width 71 of the first spacer wall 18.1 and/or the second spacer wall 18.2. The variation 74 may be with respect to a minimum height of the first spacer wall 18.1 and/or the second spacer wall 18.2, a sum of a minimum height and a maximum height 72.1 of the first spacer wall 18.1, a sum of a minimum height of the second spacer wall 18.2 and a maximum height 72.2 of the second spacer wall 18.2, etc.

As may be seen in Figure 8, the variations 74 in the heights of spacer walls 18.1, 18.2 may form a saw-like pattern, wherein the height variations create saw-like teeth in the shape of the spacer walls 18.1, 18.2, which are positioned in such a way, that the teeth connect seamlessly together when sealing the first substrate 11 with the second substrate 12. Variations 74 in the heights of spacer walls 18.1, 18.2 may form other types of patterns as well, using cooperating shapes such as hills and valleys, which are positioned in such a way that they cooperate in enabling a smooth, seamless connection of the first substrate 11 and the second substrate 12 in sealing them together. This may be beneficial in manufacturing light modulator 10. In manufacturing light modulator 10, the second substrate 12 may be positioned on top of the first substrate, thereby creating light modulator 10. With the spacer walls 18.1, 18.2 applied on the substrates shaped in this manner, there may be a seamless connection in joining the substrates together, as the saw-like teeth created by the variations 74 in height 72.1 of the first spacer wall 18.1 on the first substrate 11 may intertwine with the saw-like teeth created by the variations 74 in height 72.2 of the second spacer wall 18.2 on the second substrate 12. This may add to the robustness and stability of the light modulator 10 already in the manufacturing step of the light modulator 10. Additionally, the pattern of the variations 74 may improve the alignment of the substrates 11 and 12 with each other.

**Figure 9** schematically shows an example of a method 900 of modulating light according to an embodiment. Method 900 may comprise applying an electric potential to at least one electrode 13, 13a, 13b, 14, 14a, 14b in a step 910. The at least one electrode 13, 13a, 13b, 14, 14a, 14b may be applied to at least one of two opposing substrates 11, 12, which may be according to an embodiment. At least one of the two opposing substrates 11, 12 may be according to an embodiment. Applying the electric potential may cause modulation of an electric field in an optical layer 17. The optical layer 17 may extend between the two opposing substrates 11, 12. The optical layer 17 may comprise a fluid 15 comprising particles 30. The modulation of the electric field in the optical layer 17 may provide electrophoretic and/or dielectrophoretic movement of particles 30 in the optical layer 17. The electrophoretic and/or dielectrophoretic movement of particles 30 in the optical layer 17 may cause modulation of light passing through the optical layer 17.

According to an embodiment, a substrate 11 may be provided for use in a light modulator 10. The substrate 11 may comprise at least one electrode 13, 13a, 13b, 14, 14a, 14b applied to the substrate 11, and one or more continuous spacer walls 18, 18a, 18b, 18.1, 18.2, 18.3, 18.4 arranged on the substrate 11. The one or more continuous spacer walls 18, 18a, 18b, 18.1, 18.2, 18.3, 18.4 may follow at least part of the at least one electrode 13, 13a, 13b, 14, 14a, 14b applied to the substrate 11.

In a preferred embodiment, a light modulator 10 may be provided as follows. It may comprise two substrates 11, 12 according to an embodiment. The substrates 11, 12 may comprise at least one electrode 13a, 13b, 14a, 14b applied to the substrates 11, 12. The at least one electrode 13a, 13b, 14a, 14b may comprise at least two interdigitated electrodes 13a, 13b arranged across the first substrate 11, and/or at least two interdigitated electrodes 14a, 14b arranged across the second substrate 12. Preferably, two interdigitated electrodes 13a, 13b may be applied on the first substrate 11, and two interdigitated electrodes 14a, 14b may be applied on the second substrate 12.

One or more continuous spacer walls 18 may be arranged on each or both of the substrates 11 and 12. The one or more continuous spacer walls 18 may comprise an electrically non-conductive spacer wall 18 and/or a electrically conductive spacer wall 18. For example, spacer walls 18 may be electrically non-conductive. Spacer walls 18 may be electrically conductive, for example, if the electrodes of at least one of the substrates in a light modulator may be covered with a dielectric. An electrically conductive spacer wall may be constructed in a core-shell structure. In such a core-shell structure, an inner wall may be electrically conductive. Such inner wall may be covered by a dielectric surface.

Light modulator 10 may comprise a dielectric layer between a continuous spacer wall 18 out of the one or more continuous spacer walls 18 and at least one out of the at least one electrode 13a, 13b applied at the first substrate 11 and a corresponding electrode 14a, 14b applied on the second substrate 12, where the continuous spacer wall 18 may be an electrically conductive spacer wall 18.

A first continuous spacer wall 18.1 out of the one or more continuous spacer walls 18 may be applied on the first substrate 11, and/or a second continuous spacer wall 18.2 out of the one or more continuous spacer walls 18 may be applied on the second substrate 12. The first continuous spacer wall 18.1 may be electrically conductive, and/or the second continuous spacer wall 18.2 may be electrically non-conductive. By this, electrically conductive spacer walls 18 may be arranged on a first substrate, and electrically non-conductive spacer walls 18 may be arranged on the other substrate. This may be advantageous in manufacturing a corresponding light modulator 10.

In an embodiment, the one or more continuous spacer walls 18 of light modulator 10 may be electrically conductive, and the particles 30 may accumulate at the one or more continuous spacer walls 18. This way, the area of accumulation of the pigments 30 may be increased, by which the optical performance of the device may be improved, e.g., a superior electro-optical performance of the light modulator 10.

Spacer walls 18 may be produced in two or more parts. For example, a spacer wall 18 may comprise a bottom part which may touch a bottom substrate on which the spacer wall 18 may be applied, and/or may touch electrodes. A dielectric layer may be absent. Electrodes on the same substrate may then conduct electricity to the spacer wall 18, which may be an electrically conductive spacer wall 18. On top of the spacer wall 18, another spacer wall, e.g., an electrically non-conductive spacer wall, may be added. An electrically non-conductive spacer wall may then insulate the electrical conductivity of the spacer wall 18 to the electrodes of a top substrate if the dielectric layer is absent.

A spacer wall 18 may be fully electrically conductive. A spacer wall 18 may be partly electrically conductive, for example, half conductive, in comprising an electrically conductive spacer wall part. Having fully or partly conductive spacer walls 18 in a light modulator 10 may be advantageous in the use of the light modulator 10, as extra surface may be created for possible pigment agglomeration. This way, the light modulator 10 may have improved transparency.

The light modulator 10 may comprise at least one electrode, e.g., two electrodes, which may be applied on one substrate out of possible two substrates. In such a case, spacer walls 18 may be arranged across the one substrate. The spacer walls 18 may be electrically conductive, or electrically non-conductive. If the spacer walls 18 are electrically conductive, the spacer walls may provide an additional surface for possible pigment particles to accumulate. The pigment agglomeration may then be outside a field of view. This may be advantageous to the transparency of the light modulator 10.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A light modulator (10), comprising
- a first substrate (11),
- a second substrate (12) arranged opposite the first substrate (11),
- at least one electrode (13, 13a, 13b, 14, 14a, 14b) applied to at least the first substrate (11) on a surface facing the second substrate (12),
- an optical layer (17) extending between the first substrate (11) and the second substrate (12), the optical layer (17) comprising a fluid (15) comprising particles (30),
wherein the light modulator (10) is configured to apply an electric potential to the at least one electrode (13, 13a, 13b, 14, 14a, 14b), causing modulation of an electric field in the optical layer (17), providing electrophoretic and/or dielectrophoretic movement of the particles (30) in the optical layer (17), causing modulation of light passing through the optical layer (17), and
- one or more continuous spacer walls (18, 18a, 18b, 18.1, 18.2, 18.3, 18.4) extending across the first substrate (11) and the second substrate (12), wherein the one or more continuous spacer walls (18, 18a, 18b, 18.1, 18.2, 18.3, 18.4) define a gap (72') of the optical layer (17) between the first substrate (11) and the second substrate (12).

2. A light modulator (10) as in claim 1, wherein
- the one or more continuous spacer walls (18, 18a, 18b, 18.1, 18.2, 18.3, 18.4) follow along at least part of the at least one electrode (13, 13a, 13b, 14, 14a, 14b), and/or
- the one or more continuous spacer walls (18, 18a, 18b, 18.1, 18.2, 18.3, 18.4) do not cross at least part of the at least one electrode (13, 13a, 13b, 14, 14a, 14b), and/or
- the one or more one or more continuous spacer walls (18, 18a, 18b, 18.1, 18.2, 18.3, 18.4) cross at least part of the at least one electrode (13, 13a, 13b, 14, 14a, 14b).

3. A light modulator (10) as in any of the preceding claims, wherein at least part of the one or more continuous spacer walls (18, 18a, 18b, 18.1, 18.2, 18.3, 18.4) is positioned on top of at least part of the at least one electrode (13, 13a, 13b, 14, 14a, 14b).

4. A light modulator (10) as in any of the preceding claims, wherein at least 50%, preferably more than 80%, more preferably more than 90% of the one or more continuous spacer walls (18, 18a, 18b, 18.1, 18.2, 18.3, 18.4) is positioned on top of at least part of the at least one electrode (13, 13a, 13b, 14, 14a, 14b).

5. A light modulator (10) as in claim 3 or 4, wherein a width of the part of the one or more continuous spacer walls (18, 18a, 18b, 18.1, 18.2, 18.3, 18.4) being positioned on top of at least part of the at least one electrode (13, 13a, 13b, 14, 14a, 14b) does not exceed a width of the at least one electrode (13, 13a, 13b, 14, 14a, 14b).

6. A light modulator (10) as in any of the preceding claims, wherein the at least one electrode comprises two or more interdigitated electrodes (13, 13a, 13b, 14, 14a, 14b), and the one or more continuous spacer walls (18, 18a, 18b, 18.1, 18.2, 18.3, 18.4) are at least in part placed in between the two or more interdigitated electrodes (13, 13a, 13b, 14, 14a, 14b).

7. A light modulator (10) as in claim 6, wherein at least 50%, preferably more than 80%, more preferably more than 90% of the one or more continuous spacer walls (18, 18a, 18b, 18.1, 18.2, 18.3, 18.4) are placed in between the two or more interdigitated electrodes (13, 13a, 13b, 14, 14a, 14b).

8. A light modulator (10) as in any of the preceding claims, wherein the one or more continuous spacer walls (18, 18a, 18b, 18.1, 18.2, 18.3, 18.4) are placed at a distance (75) of at most 10 µm from a nearest electrode (13, 13a, 13b, 14, 14a, 14b) out of the at least one electrode (13, 13a, 13b, 14, 14a, 14b).

9. A light modulator (10) as in any of the preceding claims, wherein a height (72) of the one or more continuous spacer walls (18, 18a, 18b, 18.1, 18.2, 18.3, 18.4) equals a width of the gap (72') between the first substrate (11) and the second substrate (12).

10. A light modulator (10) as in any of the preceding claims, wherein a length of the one or more continuous spacer walls (18, 18a, 18b, 18.1, 18.2, 18.3, 18.4) is at least as long as a smaller one of a length and a width of the first substrate (11) and the second substrate (12).

11. A light modulator (10) as in any of the preceding claims, wherein a width (71) of the one or more continuous spacer walls (18, 18a, 18b, 18.1, 18.2, 18.3, 18.4) is a constant width (71), or varies along a length of the one or more continuous spacer walls (18, 18a, 18b, 18.1, 18.2, 18.3, 18.4).

12. A light modulator (10) as in any of the preceding claims, wherein
- a height (72) of the one or more continuous spacer walls (18, 18a, 18b, 18.1, 18.2, 18.3, 18.4) is a constant height (72), or
- a height (72) of the one or more continuous spacer walls (18, 18a, 18b, 18.1, 18.2, 18.3, 18.4) varies along a length of the one or more continuous spacer walls (18, 18a, 18b, 18.1, 18.2, 18.3, 18.4), wherein a variation of the height (72) stays within 5%, more preferably within 1%.

13. A light modulator (10) as in any of the preceding claims, wherein a first half of a continuous spacer wall (18, 18a, 18b, 18.1, 18.2, 18.3, 18.4) is applied on the first substrate (11) and a corresponding second half of the continuous spacer wall (18, 18a, 18b, 18.1, 18.2, 18.3, 18.4) is applied on the second substrate (12), wherein the first half of the continuous spacer wall (18, 18a, 18b, 18.1, 18.2, 18.3, 18.4) is vertically aligned with the second half of the continuous spacer wall (18, 18a, 18b, 18.1, 18.2, 18.3, 18.4).

14. A light modulator (10) as in claim 13, wherein a height of the first half of the continuous spacer wall (18, 18a, 18b, 18.1, 18.2, 18.3, 18.4) and a height of the corresponding second half of the continuous spacer wall (18, 18a, 18b, 18.1, 18.2, 18.3, 18.4) add up to a width of the gap (72') between the first substrate (11) and the second substrate (12).

15. A light modulator (10) as in any of the preceding claims, wherein the one or more continuous spacer walls (18, 18a, 18b, 18.1, 18.2, 18.3, 18.4) are bifurcated to follow bifurcations (19) of the at least one electrode (13, 13a, 13b, 14, 14a, 14b).

16. A light modulator (10) as in any of the preceding claims, wherein a ratio of a ground area covered by the one or more continuous spacer walls (18, 18a, 18b, 18.1, 18.2, 18.3, 18.4) to a ground area covered by the at least one electrode (13, 13a, 13b, 14, 14a, 14b) is between 50% and 90%, preferably between 60% and 80%, more preferably between 65% and 75%.

17. A light modulator (10) as in any of the preceding claims, wherein
- the one or more continuous spacer walls (18, 18a, 18b, 18.1, 18.2, 18.3, 18.4) have a width (71) of at least 1 µm, and/or
- the one or more continuous spacer walls (18, 18a, 18b, 18.1, 18.2, 18.3, 18.4) have a height (72) of at least 6 µm.

18. A light modulator (10) as in any of the preceding claims, wherein the fluid (15) comprises ink, and/or the particles (30) comprise ink particles.

19. A light modulator (10) as in any of the preceding claims, wherein the one or more continuous spacer walls (18, 18a, 18b, 18.1, 18.2, 18.3, 18.4) are monolithic.

20. A light modulator (10) as in any of the preceding claims, wherein
- the at least one electrode (13, 13a, 13b, 14, 14a, 14b) comprises at least two interdigitated electrodes (13, 13a, 13b, 14, 14a, 14b) arranged across the first substrate (11), and/or at least two interdigitated electrodes (13, 13a, 13b, 14, 14a, 14b) arranged across the second substrate (12).

21. A light modulator (10) as in any of the preceding claims, wherein the one or more continuous spacer walls (18, 18a, 18b, 18.1, 18.2, 18.3, 18.4) comprise an electrically non-conductive spacer wall and/or an electrically conductive spacer wall.

22. A light modulator (10) as in any of the preceding claims, further comprising a dielectric layer between a continuous spacer wall (18, 18a, 18b, 18.1, 18.2, 18.3, 18.4) out of the one or more continuous spacer walls (18, 18a, 18b, 18.1, 18.2, 18.3, 18.4) and at least one out of the at least one electrode (13, 13a, 13b, 14, 14a, 14b) applied at the first substrate (11) and a corresponding electrode applied on the second substrate (12), where the continuous spacer wall (18, 18a, 18b, 18.1, 18.2, 18.3, 18.4) is an electrically conductive spacer wall.

23. A light modulator (10) as in any of the preceding claims, wherein a first continuous spacer wall (18, 18a, 18b, 18.1, 18.2, 18.3, 18.4) out of the one or more continuous spacer walls (18, 18a, 18b, 18.1, 18.2, 18.3, 18.4) is applied on the first substrate (11), a second continuous spacer wall (18, 18a, 18b, 18.1, 18.2, 18.3, 18.4) out of the one or more continuous spacer walls (18, 18a, 18b, 18.1, 18.2, 18.3, 18.4) is applied on the second substrate (12), wherein the first continuous spacer wall (18, 18a, 18b, 18.1, 18.2, 18.3, 18.4) is electrically conductive, and the second continuous spacer wall (18, 18a, 18b, 18.1, 18.2, 18.3, 18.4) is electrically non-conductive.

24. A light modulator (10) as in any of the preceding claims, wherein the one or more continuous spacer walls (18, 18a, 18b, 18.1, 18.2, 18.3, 18.4) are electrically conductive, and wherein the particles (30) accumulate at the one or more continuous spacer walls (18, 18a, 18b, 18.1, 18.2, 18.3, 18.4).

25. A substrate (11) for use in a light modulator (10), the substrate (11) comprising
- at least one electrode (13, 13a, 13b, 14, 14a, 14b) arranged across the substrate (11), and
- one or more continuous spacer walls (18, 18a, 18b, 18.1, 18.2, 18.3, 18.4) arranged on the substrate (11).

26. A method (900) for modulating light, comprising
- applying (910) an electric potential to at least one electrode (13, 13a, 13b, 14, 14a, 14b) applied to at least one of two opposing substrates (11, 12), causing modulation of an electric field in an optical layer (17) extending between the two opposing substrates (11, 12) and comprising a fluid (15) comprising particles (30), providing electrophoretic and/or dielectrophoretic movement of particles (30) in the optical layer (17), causing modulation of light passing through the optical layer (17),
wherein at least one of the two opposing substrates (11, 12) is as in claim 25.
